# EUROPÄISCHE PATENTSCHRIFT

(11) **EP 1 408 276 B1**
(45) Veröffentlichungstag und Bekanntmachung des Hinweises auf die Patenterteilung: **05.08.2009**
(21) Anmeldenummer: 03020936.5
(22) Anmeldetag: 16.09.2003
(51) Int. Cl.: F21S 2/00, F21V 23/04, H05B 37/02, E04B 9/30

(54) **Beleuchtungseinrichtung mit Sensoren**
Illumination system using detectors
Système d'éclairage utilisant des détecteurs

(30) Priorität: 09.10.2002 DE 10247071; 05.11.2002 DE 10251731
(43) Veröffentlichungstag der Anmeldung: 14.04.2004
(73) Patentinhaber: Kluth, Manfred, 40721 Hilden (DE)
(72) Erfinder: Kluth, Manfred, 40721 Hilden (DE)
(74) Vertreter: Gille Hrabal Struck Neidlein Prop Roos

(56) Entgegenhaltungen:
- EP-A- 0 734 196
- EP-A- 0 814 344
- EP-A- 0 840 536
- WO-A-03/098977
- CA-A1- 2 277 645
- US-A- 5 803 589
- PATENT ABSTRACTS OF JAPAN Bd. 1996, Nr. 02, 29. Februar 1996 (1996-02-29) & JP 07 263151 A (MATSUSHITA ELECTRIC WORKS LTD), 13. Oktober 1995 (1995-10-13)
- PATENT ABSTRACTS OF JAPAN Bd. 002, Nr. 114 (M-034), 21. September 1978 (1978-09-21) & JP 53 084372 A (MATSUSHITA ELECTRIC WORKS LTD), 25. Juli 1978 (1978-07-25)

## Beschreibung

Die Erfindung betrifft eine Beleuchtungsvorrichtung zum Beleuchten von Objekten mit mehreren ansteuerbaren Lichtquellen mit den Merkmalen des Oberbegriffs des unabhängigen Anspruchs 1.

Beleuchtungseinrichtungen der gattungsgemäßen Art werden bevorzugt für abgehängte Decken und gegebenenfalls auch für Wände eingesetzt, wobei von Ausnahmen abgesehen, die Lichtquellen hinter einem Diffusor angeordnet werden. In der Regel handelt es sich hierbei um Großflächenleuchten, die als Wand- oder Deckenleuchten vollflächig ausgebildet sind und aus architektonischer Sicht neben der reinen Beleuchtungsfunktion ein räumliches Gestaltungselement darstellen. Anstelle von Großflächenleuchten können aber auch einzelne, verteilte und miteinander kombinierte Diffusorelemente zur Ausleuchtung oder aber einzelne im Raum verteilte Beleuchtungskörper verwendet werden. Somit werden dem Architekten Optionen für eine Lichtplanung ohne sichtbare Lichtquellen angeboten, die sich wesentlich vom Erscheinungsbild gegenüber herkömmlichen Beleuchtungssystemen abheben und der planerischen Gestaltung durch den Architekten freien Raum geben. Die Beleuchtungseinrichtungen können hierbei mit Lichtquellen in unterschiedlichen Farben ausgestattet sein und ermöglichen durch komplexe Steuerungen jedes einzelnen Vorschaltgerätes differenzierte Beleuchtungssituationen künstlerisch in Szene zu setzen, wobei für den Betrachter durch die nicht erkennbaren Lichtquellen und der Verwendung eines Diffusors angenehme Farbvarianten erzeugt werden, die in Verbindung mit beispielsweise akustischen Wiedergaben bestimmte Stimmungseffekte hervorrufen. Hierbei werden in der Regel Lichtquellen mit den drei Grundfarben eingesetzt, die durch unterschiedliche Intensitäten der drei Grundfarben ein frei wählbares und individuelles Farbspektrum entstehen lassen.

Die Betrachter oder Besucher derartig gestalteter Räume empfinden ein völlig anderes Verhältnis zum Licht, da die Lichtquellen und damit die Ursache für eine hervorgerufene Stimmung nicht direkt erkennbar sind. Ohne erkennbare Anhaltspunkte für die technischen Einrichtungen oder für eine direkte Zuordnung der Lichteffekte ist es daher wesentlich einfacher, die Stimmung wirken zu lassen. Im Idealfall wirken solch gestaltete Lichtszenen überhaupt nicht als Beleuchtungselement, sondern eher als ein natürliches Oberlicht oder eine Lichtkuppel, wobei ein als natürlich empfundenes Licht in der Regel als besonders angenehm empfunden wird. Durch aufwendige Steuerungseinrichtungen können hierbei stimmungsvolle Lichtübergänge oder Farben gewählt werden, die zweckentsprechend ausgewählt werden.

Zur Lichtsteuerung sind hierbei Bewegungsmelder oder Präsenzmelder bekannt, die mit Ultraschall- oder Infrarotsensoren arbeiten und in einem einstellbaren Erfassungswinkel jede Bewegung wahrnehmen oder Wärmestrahlung erfassen und die Einschaltung einer Lichtquelle vornehmen. Derartige Bewegungsmeider haben sich jedoch speziell für Großflächenleuchten nicht bewährt oder stören die vorhandene architektonische Geometrie, da sie wie Sprenkler oder Rauchmelder stets zu den Personen hin durch Decken oder Wände hindurch geführt werden müssen und somit für jedermann frei einsehbar sind. Infrarotsensoren können zudem nicht versteckt in Lichtdecken mit Leuchtstofflampen eingesetzt werden, weil die Wärme erzeugenden Vorschaltgeräte oder Leuchtstofflampen insbesondere wegen Rückreflektionen die Einschaltvorgänge beeinflussen und möglicherweise für Dauerlicht sorgen. Ein Einsatz ist aber dort möglich, wo sie nicht in Richtung der Beleuchtung blicken.

Ferner hat sich gezeigt, dass auch im Bereich der Lichtdecken oder Großflächenleuchten nicht unbedingt der gesamte Raum ausgeleuchtet werden muss, sondern eine Teilausleuchtung völlig ausreichend ist. Festinstallierte Beleuchtungssituationen sind hier besonders hinderlich, da sie nur aufwendig von Technikern in ihrer Installation geändert werden können, sodass auf unpraktische Tischleuchten zurückgegriffen werden muss. Sowohl für festinstallierte Leuchtenkörper als für durchgehende Lichtdecken gilt, dass eine zentrale Lichtsteuerung die Flexibilität nur noch mehr einschränkt, da auch die Bedienungselemente bei jeder Änderung angepasst werden müssen. Insofern steht die bisherige Steuerungstechnik in flexiblen Großraumbüros aus einem starren durchgehenden Raster die Beleuchtungstechnik am einzelnen Arbeitsplatz praktisch nie optimiert sein kann. Durchgehende Lichtdecken sind zwar überall gleich gut für eine Beleuchtungstechnik einsetzbar, arbeiten jedoch besonders unwirtschaftlich, wobei die komplexe Steuerung auch nur selten der Flexibilität gerecht werden kann, sodass mit erheblichen Energieaufwand oft die ganze Decke beleuchtet ist, obwohl nur an wenigen Arbeitsplätzen Licht benötigt wird.

Zur Energieersparnis bietet sich außerdem die Möglichkeit, an jedem Arbeitsplatz Bedienelemente vorzusehen, so dass die Lichtdecke nur in einem relativ kleinen Bereich rund um den Arbeitsplatz herum ausgeleuchtet wird. Dies erfordert jedoch eine gewisse Disziplin, da beim Verlassen und Betreten des Arbeitsplatzes das Bedienelement geschaltet werden muss. In langen Fluren ist diese Lösung nicht anwendbar, da während des Durchschreitens ständig Abschnitte an- und ausgeschaltet werden müssen. Nachteilig ist auch das technisch bedingte Rastermaß, welches die Beleuchtungssituationen im Raums vorgibt

In langen Fluren und Unterführungen, beispielsweise in Flughäfen oder Hotelfluren, ist es weit verbreitet, Infrarot-Bewegungsmelder vorzusehen, die beim Durchschreiten des Flures mehr oder weniger lange Flurabschnitte beleuchten. Beim Betreten eines neuen Flurabschnitts gehen daher nachteilhafterweise die Lampen plötzlich und gut sichtbar für den Betrachter an, evtl. sogar mit Flackern. Entweder geht man "ins Dunkle" oder es werden unnötig viele Lampen zu früh angeschaltet bzw. zu spät ausgeschaltet. Grundsätzlich werden dabei auf einmal ganze Abschnitte gleichzeitig geschaltet. Ähnliches gilt für sensorgesteuerte Lampen, z. B. Gartenleuchten mit IR-Melder: Wenn man sich auf eine solche zu bewegt, schaltet sich die Lampe an und leuchtet damit plötzlich einen neuen Abschnitt aus. Solch eine Beleuchtungseinrichtung ist zum Beispiel aus JP-A-07263151 bekannt..

Außerdem sind im Show-Bereich automatisch mitgeführte Scheinwerfer bekannt, die immer auf eine Person zentriert sind. Eine solche mechanisch Vorrichtung umfasst Verschleißteile und ist auch wegen des grellen Lichts, der räumlichen Anordnung und der Ausrichtung des Lichts nicht für die zuvor genannten Anwendungen geeignet. Solch eine Beleuchtungseinrichtung ist zum Beispiel aus EP-A-814 344 bekannt.

Der Erfindung liegt daher die Aufgabe zugrunde, eine gegenüber der bekannten Steuerungstechnik verbesserte Beleuchtungssteuerung aufzuzeigen, die eine partielle, unbewusste Beeinflussung der Ausleuchtung durch einen Betrachter oder Besucher ermöglicht.

Diese Aufgabe wird gelöst durch eine Beleuchtungseinrichtung nach Anspruch 1. Vorteilhafte Ausgestaltungen sind Gegenstand der Unteransprüche.

Beim erfindungsgemäßen Verfahren ist vorgesehen, dass Sensoren zunächst ein Objekt, beispielsweise einen Besucher, erfassen, dann die genaue Position des Objekts bestimmt wird und schließlich die Steuerungseinheit so angesteuert wird, dass die Beleuchtungseinrichtung dort eine größere oder die maximale Helligkeit ausweist, wo die Position des Objekts ist. Darunter kann auch eine Bereich um das Objekt herum verstanden werden. Dabei kann jede Art eines Sensors verwendet werden, der in der Lage ist, eine Person oder einen Gegenstand zu erfassen. Je nach Anwendungsgebiet und der zu erfassenden Objekte kommen Ultraschallsensoren, Infrarot-Bewegungsmelder, kapazitive Näherungsschalter und dergleichen in Frage. Zur Umsetzung der Erfindung kommt es nicht auf einen speziellen Sensor an. Genauso gut sind Drucksensoren oder die Auswertung von Kamera- bzw. Infrarot-Bildern denkbar. Ein Objekt kann beispielsweise dadurch entdeckt werden, dass seine Geschwindigkeit ausgewertet wird, oder eine wie auch immer geartete Veränderung der Umgebung. Die Position des Objekts kann durch einen Sensor, beispielsweise Kamera, oder eine Vielzahl von Sensoren, beispielsweise mehrere kapazitive Näherungsschalter zusammen mit einer entsprechenden Elektronik zur Auswertung der von den Sensoren stammenden Signalen, erfolgen. Die Position des Objekts kann ein-, zwei- oder dreidimensional bestimmt werden. Eine eindimensionale Bestimmung liegt beispielsweise vor in Gängen und Fluren, bei denen das Licht nur in Flurrichtung mitgeführt werden kann. Eine zweidimensionale Positionsbestimmung ist zweckmäßig in großen Hallen oder Großraumbüros, bei denen sogenannte Lichtinseln um das Objekt herum gebildet werden können. Schließlich ist auch eine dreidimensionale Positionsbestimmung denkbar, bei der auch die Höhe des Objekts, beispielsweise im Fahrstuhl oder auf der Treppe, berücksichtigt wird. Unter die Erfindung fallen auch andere Mittel zur Positionsbestimmung der Objekte, z. B. Sender oder Transponder, die das Objekt mit sich führt.

Das Verfahren ist besonders gut umsetzbar mit einer Vielzahl von handelsüblichen Sensoren, die jeweils einzeln einen Messwert liefern, der in einer bekannten Relation zur Entfernung bzw. Geschwindigkeit des registrierten Objekts stehen kann. Die mit den Sensoren verbundene Steuerung kann daher aus den von einer Vielzahl von Sensoren gelieferten Signalen Rückschlüsse auf die Position des Objekts ziehen und die Lichtquellen so ansteuern, das sich über oder in einem Bereich um das Objekt eine höhere Helligkeit ergibt. Zur Positionsbestimmung ist außerdem die Registrierung der Geschwindigkeit geeignet, da diese die erste Ableitung des Weges ist. Mehrere Sensoren haben den Vorteil, dass handelsübliche, preiswerte Sensoren eingesetzt werden können.

Im Gegensatz zum Stand der Technik geschieht das Mitführen des Lichts mit dem Objekt energiesparend mit lokal auftretender Beleuchtung ohne Stufen, wie z. B. in Tiefgaragen und Hotelfluren, bei denen beim Betreten eines Flurabschnitts die Beleuchtung eines ganzen Abschnittes schlagartig angeht. Erfindungsgemäß kommt es vielmehr darauf an, dass die Beleuchtung quasi wie eine "Aura" oder "Lichtinsel" mit dem Objekt stufenlos fließend mitwandert. Dies wird insbesondere dadurch erreicht, dass die in Bewegungsrichtung liegenden Lichtquellen stufenlos heller und die in entgegengesetzter Richtung liegenden Lichtquellen stufenlos dunkler geregelt werden. Die Überlagerung des von den einzelnen Lichtquellen ausgestrahlten Lichts ergibt somit eine stufenlos mitwandernde "Lichtinsel", insbesondere bei Verwendung eines die einzelnen Lichtquellen verdeckenden Diffusors. Je nach Geometrie der Beleuchtungseinrichtung ist auch das Dimmen in Stufen möglich, wobei es darauf ankommt, dass die Stufen vom Auge nicht bewusst wahrgenommen werden.

Für den Betrachter besonders angenehm ist diese Beleuchtung, wenn das Licht im näheren Umkreis vom Betrachter besonders hell ist und mit der Entfernung langsam abnimmt. Es ist im Allgemeinen nicht zwingend notwendig, dass im Bereich des erfassten Betrachters exakt die stärkste Helligkeit oder das genaue Zentrum der Lichtinsel vorliegt oder diese gleichmäßig mit zunehmender Entfernung in ihrer Helligkeit abnimmt. Der Helligkeitsgradient, der Helligkeitsmittelpunkt und die Helligkeit der entfernt liegenden Umgebung des Objekts sind daher in Abhängigkeit vom konkreten Anwendungsfall auszuwählen. Als besonders angenehm wird die Beleuchtung jedoch dann empfunden, wenn die Übergänge möglichst stufenlos sind.

Das Verfahren ist dann mit preiswerter Technik zu realisieren, wenn nicht permanent, sondern in gewissen Zeitabständen, die Position des Objekts neu bestimmt wird. Dadurch ergibt sich eine gewisse Trägheit der Nachführung, die auch als gestalterisches Element eingesetzt werden kann. Wenn die Position des Objektes in einem Zeitintervall eine große Veränderung erfahren hat, dann sollte sich auch die Lichtinsel im einem bestimmten Verhältnis zum Zeitintervall und der Strecke schnell bewegen.

Bevorzugt ist es bei der Form, Größe, Helligkeit oder Farbe der Leuchtinsel die Umgebungshelligkeit zu berücksichtigen. Dies hat die folgenden beispielhaft aufgeführten Vorteile: Nachts kommt beispielsweise eine Unterführung mit weniger Helligkeit aus, da die Augen an die Dunkelheit angepasst sind. Ja nach Beleuchtungssituation draußen, wie z. B. Bewölkung, Sonne, Tageszeit herrscht draußen ein bestimmter Farbton vor, der nachzubilden ist. Auch kann ähnlich wie bei Tunneln der Eintritt bzw. Austritt aus der erfindungsgemäßen Beleuchtungsvorrichtung an die Helligkeit der Ungebung angepasst sein, während im Zentralbereich der Beleuchtungsvorrichtung immer ein bestimmter Helligkeitswert vorherrscht. Die Helligkeit von Ein- und Austritt kann dabei natürlich auch unterschiedlich sein. Dabei versteht sich, dass das Licht mit dem beweglichen Objekt mitgeführt wird.

Die Beleuchtungseinrichtungen, die nach den zuvor erläuterten Verfahren betrieben werden können, weisen naturgemäß die zuvor genannten Vorteile gegenüber dem Stand der Technik auf.

Insbesondere kommt es bei dieser Beleuchtungseinrichtung darauf an, dass eine im Bereich des Objekts wirkende Leuchtzone ("Lichtinsel") erzeugt werden kann, die insbesondere stufenlos, d. h. ohne plötzliche, bewusst wahrnehmbare Helligkeitsschwankungen mit dem Objekt mitführbar ist.

Wenn jeder Lichtquelle genau ein Sensor zugeordnet ist, wobei die Helligkeit der Lichtquelle in Abhängigkeit der Entfernung zum Objekt steuerbar ist, kann die Leuchte modular und mit geringem Aufwand hergestellt werden, wobei nachträgliche Erweiterungen problemlos möglich sind, da nicht in die bestehende Einrichtung eingegriffen werden muss. Die einzelnen Lichtquellen bzw. Sensoren sind unabhängig voneinander, d. h. sie tauschen keine Daten aus. Die erfindungsgemäße Leuchte wird also in diesem Fall durch mehrere unabhängige Lampen mit Näherungssensor gebildet, bei denen die Lampen umso heller werden, je näher das Objekt bei ihr steht.

In einer vorteilhaften Ausgestaltung kann dieser Effekt für mehrere Objekte unabhängig voneinander bewirkt werden, was beispielsweise in Großraumbüros wichtig ist.

Leuchtstoffröhren, insbesondere solche, die über elektronische Vorschaltgeräte (EVG) betrieben werden, sind im Vergleich zu Glühlampen sparsamer im Verbrauch. Elektronische Vorschaltgeräte haben den Vorteil, dass die Leuchtstoffröhren flackerfrei und dimmbar betrieben werden können und beim Anlaufen nicht flackern. Das gleiche gilt für LEDs.

Prinzipiell ist die erfindungsgemäße Vorrichtung auch mit nicht-dimmbaren Lichtquellen denkbar, sofern genügend von ihnen vorhanden sind, z. B. LEDs. Das Ein- oder Ausschalten einer einzelnen Lichtquelle wird in diesem Fall vom Betrachter nicht bewusst wahrgenommen, ähnlich wie bei den Pixeln eines Bildschirms. Dimmbare Lichtquellen sind jedoch bevorzugt, da dadurch die Anzahl der benötigten Lichtquellen sinkt.

In einer Ausgestaltung ist vorgesehen, dass die Steuerungseinheit mit nicht sichtbar angeordneten Sensoren zusammenarbeitet, die beispielsweise eine elektromagnetische Feldänderung und somit eine Bewegung innerhalb eines auszuleuchtenden Bereiches erfassen und ein Steuersignal erzeugen, welches zur Ansteuerung einer oder mehrerer Lichtquellen vorgesehen ist. Durch die Verwendung nicht sichtbarer Sensoren wird die architektonische Gestaltung der Räume in keiner Weise beeinträchtigt und daher kommt eine solche Steuerung besonders für Großflächenleuchten infrage, bei denen eine architektonisch ansprechende Formensprache zum Ausdruck kommen soll, ohne dass diese durch Installation von kleinteiligen Beleuchtungselementen oder Bewegungsmelder das Gesamtkonzept zerstören. Erfindungsgemäß werden die Sensoren so angeordnet, dass sie für den Besucher völlig unsichtbar bleiben und der Besucher zunächst gar nicht merkt, dass er über Sensoren eine Beeinflussung der Lichtgestaltung vornimmt. Diese Beeinflussung kann neben in einer Intensitätsveränderung auch in einer Farbveränderung des ausgestrahlten Lichtes bestehen und sich auf kleinere oder größere Bereiche erstrecken. Diese Ausleuchtung ist jedoch nur im Zusammenhang mit einer Steuerungseinheit möglich, die eine Einzelansteuerung der Lichtquellen beziehungsweise Vorschaltgeräte ermöglicht. Durch die verwendeten Sensoren kann hierbei auf das Farbspektrum und auf die Lichtintensität Einfluss genommen werden, wobei in der Regel eine große Zahl von Sensoren für eine Großflächen leuchte eingesetzt wird, damit einzelne Lichtinseln individuell steuerbar sind, um beispielsweise nur die Lichtquellen im Erfassungsbereich eines einzelnen Sensors anzusteuern. Hierbei besteht die Möglichkeit, dass einzelne oder mehrere Lichtquellen durch mehrere Sensoren gesteuert werden und beispielsweise das Licht einer sich bewegenden Person folgt.

Ferner besteht die Möglichkeit, dass beispielsweise auf Bahnhöfen oder Flughäfen, große Räume, lange Flure oder Gänge mit einem Dämmerlicht ausgeleuchtet werden und erst beim Betreten voll oder zumindest teilweise mit hoher Lichtintensität ausgeleuchtet werden. Hierdurch lässt sich der Stromverbrauch in erheblicher Weise reduzieren.

Besonders vorteilhaft ist die Kombination der Sensoren in Verbindung mit einer als Diffusor ausgebildeten Folie, insbesondere transluzenten Folie oder einer Lackfolie. Hierbei können die Lichtquellen zur Erreichung einer gleichmäßig ausgeleuchteten Fläche hinter dem Diffusor angeordnet sein oder als Spots, beispielsweise in der Lackdecke oder Lackfolie, integriert sein. Somit sind die Sensoren unsichtbar hinter der Folie beziehungsweise Lackdecke angeordnet und ermöglichen eine individuelle partielle Lichtsteuerung, ohne das ein Betrachter die Steuerungselemente erkennen kann und darüber hinaus die Beeinflussung durch ihn selbst zunächst erkennt. Die Sensoren können aber auch in einzelnen Beleuchtungskörpern eingesetzt werden, die verdeckt liegende Sensoren insbesondere mit einem Erfassungsbereich von 360° enthalten.

Alternativ besteht die Möglichkeit, dass die Sensoren hinter einer als Diffusor ausgebildeten mattierten Glas- oder Kunststoffscheibe angeordnet werden und die Lichtquellen entsprechend der Ausführung mit einer Folie hinter dem Diffusor angeordnet sind. Mattierte Glas- oder Kunststoffscheiben sorgen ebenso wie eine transluzente Folie für eine optimale Streuung des Lichtes, sodass eine gleichmäßige schattenfreie Ausleuchtung erfolgt.

In besonderer Ausgestaltung der Erfindung ist vorgesehen, dass die Sensoren als Sensorfeldmatrix ausgebildet z. B. in dem Diffusor, beispielsweise der mattierten Glasoder Kunststoffscheibe, integriert sind oder unsichtbar auf der Innen- oder Außenseite befestigt sind, Hierzu wird vorzugsweise ein transparentes Sensormaterial wie Indiumzinnoxid eingesetzt, welches hochtransparent ist und in keiner Weise die Lichtwirkung nachteilig beeinflusst. Durch die Sensorfeldmatrix wird aber auch unter Berücksichtigung des Erfindungsgegenstandes ein besonders großes Erfassungsfeld geschaffen, wodurch eine teilweise Ausleuchtung des Raumes vorgenommen werden kann.

Sensoren mit großer Reichweite erhält man durch große Flächen, z. B. eine auf einer Fensterscheibe aufgebrachte elektrisch leitfähige Schicht, beispielsweise Sonnenschutzschicht oder Wärmeschutzschicht. Diese können dann auch als Elektrode bei einem kapazitiven Annäherungsschalter genutzt werden. Dadurch können extrem große Elektroden gebildet werden, wodurch der Näherungsschalter eine besonders hohe Reichweite hat.

In besonderer Ausgestaltung der Erfindung ist vorgesehen, dass die Sensoren die Annäherung sowie die Geschwindigkeit und Entfernung der sich nähernden Objekte beziehungsweise Personen erfassen, sodass beispielsweise in Abhängigkeit der Entfernung die Intensität der Lichtquellen zu- oder abnimmt oder die Farbtemperatur verändert wird. Durch die zusätzliche Erfassung der Geschwindigkeit der Bewegung kann ebenfalls die Intensität oder die Farbtemperatur beeinflusst werden.

Die Information über die Geschwindigkeit des Objekt, die natürlich auch mittelbar durch die zeitliche Veränderung der Position ermittelt werden kann, kann beispielsweise auch benutzt werden, um die Größe, Form, Helligkeit oder Farbe der Lichtinsel zu beeinflussen, wie die folgenden Beispiele zeigen: Bei schnell bewegten Objekten kann die Lichtinsel vergrößert sein, um das Objekt nicht "ins Dunkle" laufen zu lassen. Es ist ferner denkbar, die Lichtinsel so zu formen, dass sie eine gestreckte Form in Richtung der Bewegung des Objekts erhält und nach vorne eine größere Fläche und nach hinten eine kleinere Fläche abdeckt. Wer langsam ein Gebiet durchschreitet und dabei Details des Gebiets wahrnehmen möchte, z. B. bei der Qualitätskontrolle, benötigt mehr Licht, als jemand, der nur zügig das Gebiet passiert.

Die hierzu einsetzbaren Sensoren bestehen beispielsweise aus kapazitiven Nährungsschaltern großer Reichweite, die auch über große Entfernungen die Annäherung eines Besuchers wahrnehmen und somit über mehrere Stufen hinweg Steuersignale entsprechend der Entfernung oder Art der Bewegung erzeugen, die in eine Intensitäts- beziehungsweise Farbtemperatursteuerung umgesetzt werden. Das in der kapazitiven Schaltungstechnik verwendete elektromagnetische Feld durchdringt hierbei den Diffusor beziehungsweise die Lackfolie und wertet die Situation vor der Beleuchtungseinrichtung aus. Alternativ besteht die Möglichkeit, dass die Sensoren beispielsweise in den Boden vor einer Lichtwand beziehungsweise unter einer Lichtdecke integriert werden und beim Betreten beziehungsweise Durchschreiten des Raumes eine Lichtbeeinflussung ermöglichen. So kann beispielsweise ein Tunnel durch seitliche Lichtwände oder Lichtdecken hergestellt und eine Beleuchtungssituation geschaffen werden, die genau in dem Bereich die Lichtquellen beaufschlagt, in dem sich der Besucher gerade aufhält. Gegenüber einer herkömmlichen festinstallierten Beleuchtung aus vielen einzelnen Einzelleuchten, die eine optimale Beleuchtungssituation nur in ihrer unmittelbaren Nähe erzeugen, kann somit die vorgesehene Beleuchtung mit Hilfe der Sensortechnik stets mit dem Gast mitwandern und ihn beim Durchschreiten des Raumes oder des Tunnels begleiten. Das hierdurch beispielsweise der Energieverbrauch reduziert werden kann, da immer nur die Leuchten angesprochen werden, die tatsächlich benötigt werden, ist nahezu selbstverständlich und führt darüber hinaus auch zu interessanten Effekten, die einen bleibenden Eindruck hinterlassen. Daher eignen sich derartige Großflächenleuchten unter anderem auch in repräsentativen Räumen oder für Werbemaßnahmen. Soweit notwendig können alle auszuleuchtenden Räume ein notwendiges Dämmerlicht aufweisen, um einen Besucher die Tiefe des Raumes ansatzweise zu verdeutlichen,

Ein weiterer wesentlicher Vorteil der vorgestellten Technik eröffnet sich beispielsweise auch beim Einsatz der Lichtdecken in einem Großraumbüro, in dem mehrere Arbeitsplätze vorhanden sind und beispielsweise nur einzelne zurzeit besetzt sind. Hier besteht die Möglichkeit über die Sensoren die Anwesenheit einer Person zu erfassen und im unmittelbaren Umfeld des Arbeitsplatzes für eine optimale Beleuchtung zu sorgen, während hingegen der übrige Raum, und zwar dort wo sich keine Personen aufhalten, abgedunkelt ist. Hierdurch kann die betreffende Person wesentlich konzentrierter arbeiten und fühlt sich nicht durch andere Lichtquellen gestört, wobei nebenbei der Energieverbrauch erheblich reduziert wird. Hinzu kommen die besonderen Vorteile der Lichtdecken die ein völlig diffuses Licht und eine homogene Lichtverteilung ohne Blendwirkung und störende Reflexe auf Bildschirmoberflächen verursachen und eine schattenfreie Ausleuchtung der Arbeitsfläche beziehungsweise des Arbeitsbereiches ohne störende Leuchtkörper ermöglichen, Diese Variante bietet sich insbesondere in Großraumbüros an, wo eine flexible Gestaltung der einzelnen Arbeitszonen im Vordergrund steht und jederzeit ein leichtes Verändern der Arbeitsplatzsituation oder Bildung von Arbeitsgruppen durch Trennwände oder Schaffung von weiteren Arbeitsplätzen gefordert wird. Mit Hilfe der Sensoren kann die Anwesenheit von Personen unterhalb der Lichtdecke festgestellt werden, sodass einzelne Gruppen von Lichtquellen, beispielsweise Leuchtstoffröhren im Umfeld eines Sensors eingeschaltet werden und ermöglichen unter anderem eine Absenkung des Energieverbrauchs. Im Extremfall kann das Licht einem einzelnen Mitarbeiter in einem Großraumbüro stets an den Arbeitsplatz folgen, an dem er sich gerade aufhält. Bei voller Besetzung des Großraumbüros leuchtet selbstverständlich die ganze Decke, sodass an jedem Platz, an dem sich ein Mitarbeiter derzeit befindet personenabhängig ideale Lichtverhältnisse entstehen.

In weiterer Ausgestaltung der Erfindung ist vorgesehen, dass die Sensoren mit einem tageslichtabhängigen Sensorelement, beispielsweise einem Fotowiderstand oder einer Fotodiode, kombiniert eingesetzt werden, sodass unter Berücksichtigung der vorhandenen Lichthelligkeit eine Beeinflussung der Lichtquellen nur bei Dunkelheit oder im Dämmerlicht erfolgt. Darüber hinaus können Sensoren mit weiteren Steuerungselementen gekoppelt werden, die eine Beaufschlagung von einzelnen oder mehreren Lichtquellen unabhängig von den ansprechenden Sensoren ermöglichen, wenn dies gewünscht wird.

Die aufgezeigte Steuerungstechnik kann ferner auch zur Gestaltung bei künstlerischen Darbietung oder aber in Lichttherapieräumen eingesetzt werden, die völlig neue Behandlungsmethoden ermöglichen.

Die verwendeten kapazitiven Sensoren bestehen in der Regel aus einer Sensorplatte und können unsichtbar für jeden Betrachter beispielsweise hinter dem Diffusor oder einer Verkleidung montiert werden. Die Reichweite des homogenen elektrischen Feldes ist hierbei individuell einstellbar und kann bis zu einer Größe von mehreren Quadratmetern eingestellt werden. Neuartige Sensoren zeigen sich darüber hinaus durch eine hohe Störsicherheit durch digitale Filtertechnik aus und sind unempfindlich gegen Umwelteinflüsse unter anderem auch gegen Mobilfunk.

Die flachen Sensoren können somit unsichtbar für jeden Betrachter angeordnet werden und das elektrische Feld durchdringt alle nicht leitenden Materialien, wie Holz oder Kunststoff. Durch leitende oder schwach leitende Materialien wird das elektrische Feld abgelenkt, sodass vorhandene Gegenstände oder metallische Möbeleinrichtungen von diesem Feld eingehüllt werden und der Bereich vor und hinter den vorhandenen Möbeln zur Lichtbeeinflussung ebenfalls herangezogen werden kann. Zur Abschirmung gegenüber elektromagnetischer Strahlung der Vorschaltgeräte oder andere Geräte die zur Ansteuerung der Lichtquellen benötigt werden, kann hierbei eine Abschirmung verwendet werden, die zwischen diesen Geräten und dem Sensor angeordnet ist, wobei dieser hinter den einzelnen Lichtquellen liegend montiert wird, damit keine Schattenwirkung auch bei einer transluzenten Folie entsteht, Das elektrische Feld der Sensoren durchdringt hierbei ungehindert die Folie und erfasst den Bereich unterhalb der Decke oder vor einer Wandfläche. Zur Verstärkung des elektrischen Feldes beziehungsweise Erzeugung bestimmter Feldabmessungen können die Sensoren mit elektromagnetisch empfindlichen Flächen beispielsweise Foliengitter, Folienstreifen oder einer bedampften Glasscheibe, gegebenenfalls machendrahtähnlichen Gebilden kombiniert werden, die die Ansprechwahrscheinlichkeit erhöhen und bestimmte sich möglicherweise überlappende Raumbereiche erfassen.

Die Erfindung ermöglicht somit in Abhängigkeit von speziellen Lichtbedürfnissen und der Anwesenheit von Personen in dem auszuleuchtenden Raum eine besonders vorteilhafte und angenehme Ausleuchtung vorzunehmen, wobei durch die Sensoren und zwar in Abhängigkeit der Entfernung und der Annäherungsgeschwindigkeit die Intensität und/oder die Farbtemperatur des diffus ausgestrahlten Lichtes beeinflusst werden kann. Das Mitführen des Lichts wird anders als bei bisherigen Anwendungen in Tiefgaragen und Hotelfluren nicht bewusst erlebt, da stufenlos eine Mitführung erfolgt. Das Licht schwebt gleichsam mit der Person durch den Raum, so dass der Betrachter es als selbstverständlich und daher als nicht-künstlich empfindet..

Es versteht sich von selbst, dass solche Lichtquellen bevorzugt ein Frequenz- und Intensitätsspektrum ausstrahlen, das dem von natürlichen Licht sehr nahe kommt und daher als besonders angenehm empfunden wird. Als lichtdurchlässiges Material kommen insbesondere transluzente Folien in Frage, welche für Licht jeglicher Wellenlänge durchlässig sind und nach erfolgter Verspannung eine glatte Oberfläche ohne Faltenbildung ergeben. Bei eingeschalteten Lichtquellen wird das Licht gleichmäßig mit einem breiten Lichtspektrum durch die transluzente Folie transmitiert, ohne das eine Schattenbildung entsteht. Hierbei werden vorzugsweise sehr dünne Folien mit einer Dicke von ungefähr 0,25 mm verwendet, die auch ultraviolettes und infrarotes Licht im Grenzbereich transmitieren können, wodurch dem Betrachter der Eindruck von natürlichem Licht vermittelt wird. Darüber hinaus kann Licht unter 380 Manometer Wellenlänge herausgefiltert werden, sodass die lichtempfindlichen Materialien geschützt werden. Neben diesen besonders vorteilhaften Eigenschaften sind die Folien auch sehr flexibel, sodass sie ohne zu Zerreißen leicht auf vorhandene Spannrahmen oder in vorhandene Wand- oder Bodenschienen einklemmbar sind. Der besondere Vorteil der Folien liegt darin, dass diese nicht durchsichtig sind, sodass der Raum hinter der Folie, insbesondere die Lichtquellen als auch die Sensoren, verborgen bleiben. Besonders vorteilhaft ist die Durchlässigkeit der Folien für elektrische Felder beziehungsweise infrarotes Licht, da hierdurch Infrarotempfänger und Infrarotsender zur Steuerung der Beleuchtung oder weiterer Geräte eingesetzt werden können, wenn die Steuerungseinheit hinter den Folien angeordnet sind. In einzelnen Fällen, und zwar dort wo mit erheblicher Verschmutzung zu rechnen ist, werden in vorteilhafter Weise Doppelfolien eingesetzt, die insbesondere staubdicht in einem Abstand zueinander angeordnet sind und somit auf der unteren sichtbaren Folie keine Fleckenbildung durch Staubpartikel oder dergleichen entstehen.

Mit derartigen Folien sind besonders preiswert und ästhetisch große Leuchtflächen realisierbar. Zu Wartungs- und Montagezwecken ist an der Folie ein umlaufender Keder vorgesehen, der wand- und deckenseitig befestigte Profile unter Dehnung der Folie einrastet.

Die Erfindung wird im Weiteren anhand der Figuren näher erläutert. Es zeigt
- Figur 1: eine als Wandfläche ausgebildete Großraumflächenleuch-te mit partieller Beaufschlagung der verdeckt liegenden Lichtquellen,
- Figur 2: eine an der Decke befestigte Großflächenleuchte mit Beleuchtungsinseln im Bereich vorhandener Personen,
- Figur 3: in einer geschnittenen Ansicht die Anordnung der Lichtquellen und der Sensoren zu einem vorhandenen Diffusor-element und
- Figur 4: in einer geschnittenen Ansicht die Anordnung von Lichtquellen und Sensoren.

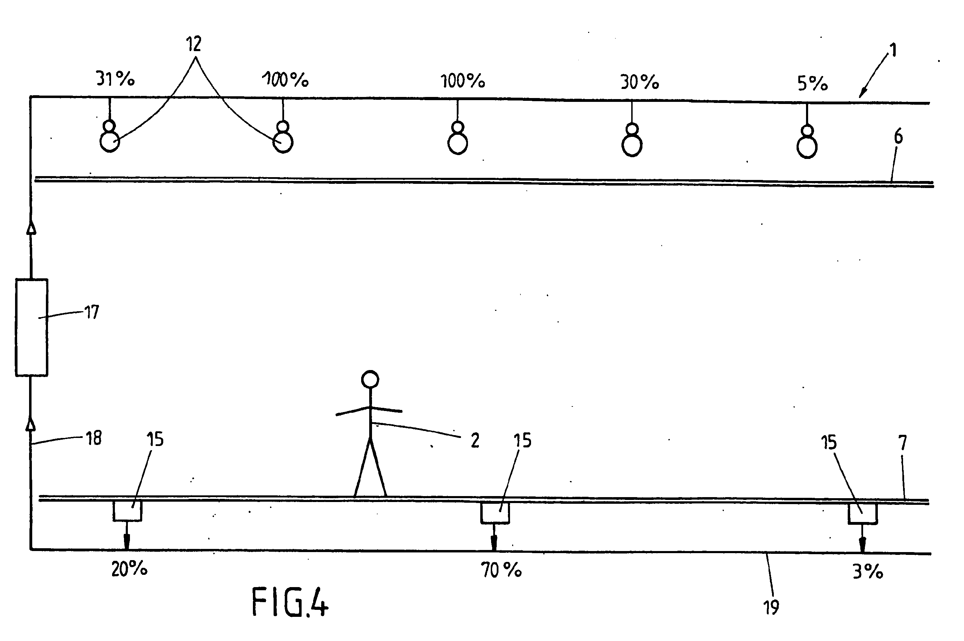

Figur 4 zeigt eine an einer nicht dargestellten Decke befestigte Großflächenleuchte 1, die im Wesentlichen aus nebeneinander angeordneten Leuchtmitteln, hier Leuchtstoffröhren 12, sowie einem darunter abgehängten Diffusor in Form einer Folie 6 besteht. Der Abstand der Lichtquellen 12 zueinander und deren Abstand zu dem Diffusor sind so gewählt, dass durch Überlagerung der von den einzelnen Leuchtmitteln 12 abgestrahlten Helligkeit eine gleichmäßige Ausleuchtung des Diffusors 6 bewirkt wird, ohne dass sich einzelne Leuchtmittel unerwünschterweise abzeichnen. Durch eine Steuer-/Datenleitung 18 sind die in ihrer Helligkeit beeinflussbaren Lichtquellen 12 mit einer zentralen Steuerungseinheit 17 verbunden. Bei Leuchtstoffröhren erfolgt das Dimmen in der Regel über elektronische Vorschaltgeräte, die in Figur 4 nicht eingezeichnet sind. Die Stromversorgung der Lichtquellen 12 ist in Figur 4 ebenfalls nicht explizit eingezeichnet. Die Steuer-/Datenleitung 18 ist wahlweise als Punkt-zu-Punkt-Verbindung oder Bus ausführbar, je nach verwendeten Lichtquellen bzw. Vorschaltgeräten.

Die Steuerungseinheit 17 ist ferner verbunden mit im Boden eingelassenen Sensoren, beispielsweise kapazitiven Näherungsschaltern. Aus ästhetischen Gründen können diese vor dem Betrachter 2 verborgen sein. Je nach Funktionsweise der Sensoren 15 können diese natürlich auch oberhalb des Diffusors 6 angebracht oder an den Wänden befestigt sein. Über eine weitere Datenleitung 19, angeschlossen als Punkt- zu-Punkt-Verbindung oder als Bus, werden die Signale der Sensoren 15 an die zentrale Steuerungseinheit 17 übermittelt.

Im Ausführungsbeispiel wird die Position der Person 2 wie folgt ermittelt: Je nach Nähe des Objekts 2 senden die Sensoren 15 ein Signal zwischen 0 und 100 %. In Figur 4 ergeben sich im Einzelnen von links nach rechts folgende Meßwerte: 20 %, 70 % und 3 % für die Sensoren 15. Die zentrale Steuereinheit 17 ermittelt aus diesen Werten die vermutliche Position der Person 2, wobei beim Vorsehen einer Sensormatrix anstelle einer Sensorzeile, auch zweidimensionale Positionsbestimmungen möglich sind. Um nunmehr eine Lichtinsel oberhalb der Person 2 zu erzeugen, werden die Lichtquellen 12 von links nach rechts wie folgt mit Helligkeit beaufschlagt: 31 %, 100 %, 100 %. 30 %, 5 %.

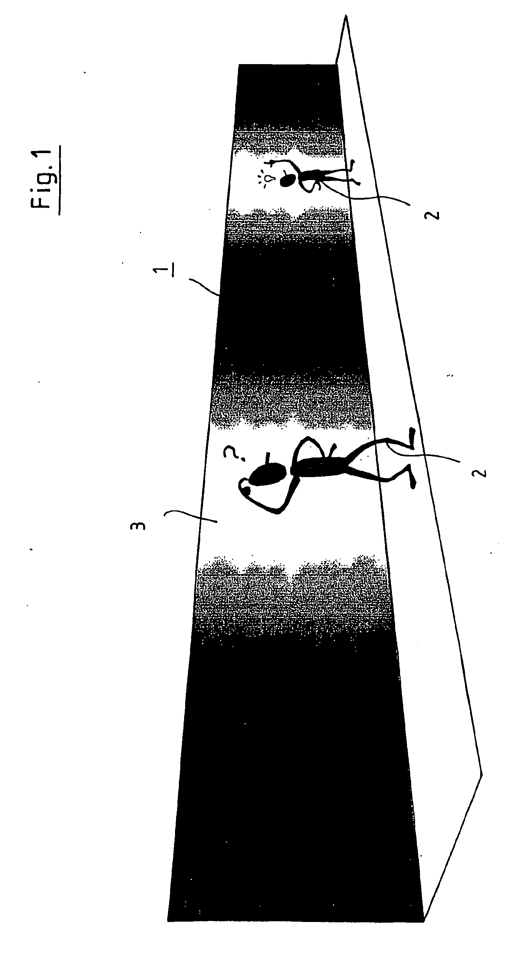

Spezielle Anwendungen und weitere Details werden anhand der Figuren 1 bis 3 erläutert.

Figur 1 zeigt eine als Wandfläche ausgebildete Großflächenleuchte 1, hinter der sich mehrere nicht sichtbare Lichtquellen, Sensorelemente und Vorschaltgeräte befinden. Im Bereich der vorhandenen Personen 2 ist lediglich in deren unmittelbaren Umgebung eine Beleuchtung vorhanden, die durch den erhellten Wandbereich 3 gekennzeichnet ist, während in den Endbereichen oder im dazwischenliegenden Bereich vorhandene Lichtquellen nicht angesteuert werden.

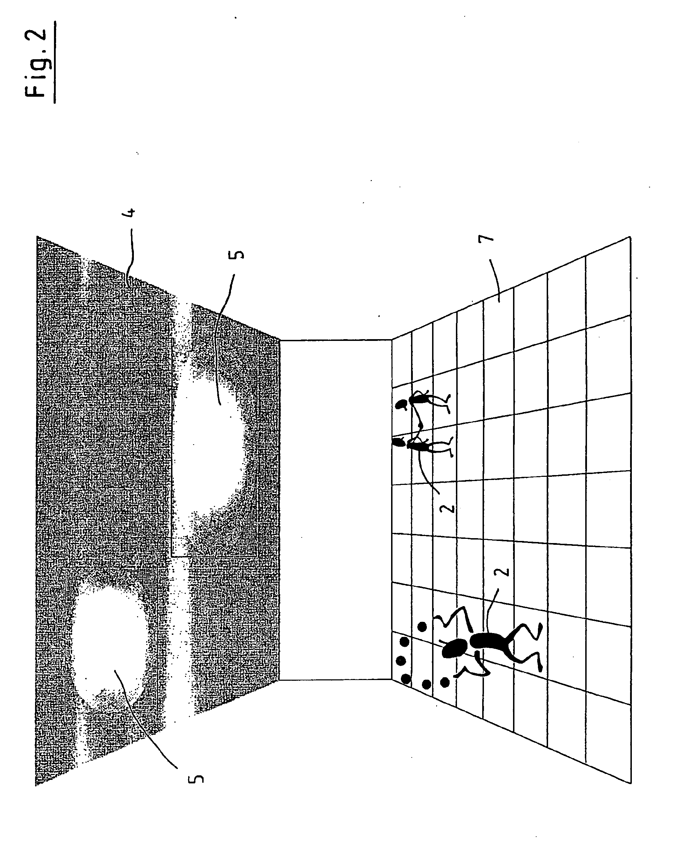

Figur 2 zeigt eine ähnliche Anordnung, wobei es sich jedoch um eine Großflächenleuchte 4 handelt, die an einer Decke montiert ist und den darunter befindlichen Raum ausleuchtet. Nur dort, wo sich Personen 2 aufhalten entstehen einzelne Lichtinseln 5, die durch hellerleuchtete Kreise angedeutet sind, während der übrige Raumbereich nicht beleuchtet wird. Die nicht erkennbaren Sensoren können beispielsweise hinter einen Diffuser 6 oder im Boden 7 angeordnet sein.

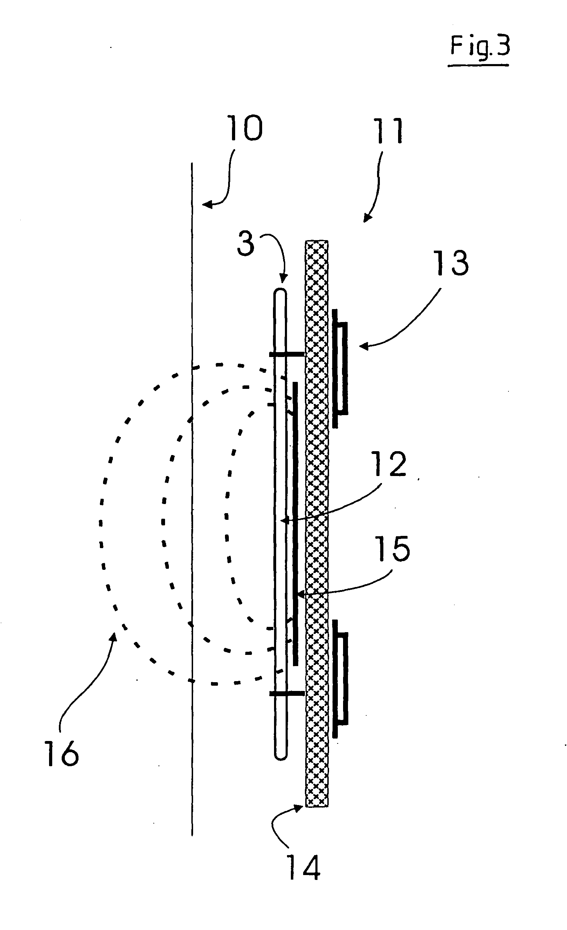

Figur 3 zeigt in einer geschnittenen Seitenansicht einen Diffusor 10 beispielsweise eine transluzente Folie, der vor einer Beleuchtungseinrichtung 11, bestehend aus Lichtquellen 12, beispielsweise Leuchtstoffröhren, und Vorschaltgeräten 13 besteht. Die Vorschaltgeräte 13 sind mit den Lichtquellen 12 auf einer Trägerplatte 14 montiert, die wiederum an einer Wand oder Decke befestigt werden kann. Zwischen der Trägerplatte 14 und der Lichtquelle 12 wird ein flächiger Sensor 15 angeordnet, der mit seinem elektrischen Feld 16 den Diffusor 10 durchdringt und den Bereich vor dem oder unter dem Diffusor 10 erfasst. Bei einer durch eine Person hervorgerufenen Störung des elektromagnetischen Feldes 16 wird diese somit von dem Sensor 15 erfasst, wobei eine Entfernungsbestimmung und die Geschwindigkeit der sich nähernden Person möglich ist. Mit Hilfe der erzeugten Steuersignale kann hierbei die Steuerungseinheit mit den notwendigen Informationen versehen werden, um eine individuelle Steuerung der Lichtquellen 12 zu ermöglichen. Die Steuerung kann beispielsweise in einer Veränderung der Farbtemperatur aber vorzugsweise in einer Intensitätsveränderung bestehen.

## Patentansprüche

1. Beleuchtungseinrichtung, insbesondere als Wand- oder Deckenleuchte, mit mehreren hinter einem gemeinsamen Diffusor (6, 10) angeordneten ansteuerbaren Lichtquellen (12)
**dadurch gekennzeichnet, dass**
die Beleuchtungseinrichtung Sensoren (15) zur Erfassung eines bewegten oder ruhenden Objekts (2), beispielsweise eines Menschen, aufweist,
die Beleuchtungseinrichtung eine Steuerungseinheit (17) aufweist, die derart mit den Sensoren (15) zusammenarbeitet, dass die Steuerungseinheit (17) die Lichtquellen (12) so anzusteuern vermag, dass eine Leuchtzone bewirkt wird, in der das Objekts (2) und/oder der Bereich um das Objekt stärker ausgeleuchtet wird als die Umgebung des Objekts, wobei
die Steuerungseinheit (17) die Lichtquellen (12) durch stufenlose Regulierung der Leuchtstärke der Lichtquellen so anzusteuern vermag, dass die Leuchtzone stufenlos mit den Objekt mitgeführt wird.

2. Einrichtung nach einem der vorherigen Ansprüche, **dadurch gekennzeichnet, dass** als Diffusor (6, 10) mattierte transparente Flächen, insbesondere Glas- oder Kunststoffscheiben oder Folien, wie transluzente Folien oder Lackfolien verwendet werden.

3. Einrichtung nach einem der vorherigen Ansprüche, **dadurch gekennzeichnet, dass** die Mattierung des Diffusors und der Abstand benachbarter Leuchtmittel, sowie deren Abstand derart bemessen sind, dass für den Betrachter die einzelnen Leuchtmittel nicht wahrnehmbar sind und/oder eine homogenen Ausleuchtung des Diffusors erreicht wird.

4. Einrichtung nach einem der vorherigen Ansprüche, **dadurch gekennzeichnet, dass** die Sensoren (15) hinter dem Diffusor (6, 10) angeordnet sind.

5. Einrichtung nach einem der vorherigen Ansprüche, **dadurch gekennzeichnet, dass** die Steuerungseinheit (17) die Lichtquellen (12) so anzusteuern vermag, dass die Leuchtzone mit dem Objekt mitgeführt werden kann, wenn dieses sich bewegt.

6. Einrichtung nach einem der vorherigen Ansprüche, **dadurch gekennzeichnet, dass** jeder Lichtquelle genau ein Sensor zugeordnet ist, wobei die Helligkeit der Lichtquelle in Abhängigkeit der Entfernung zum Objekt steuerbar ist, wobei insbesondere die einzelnen Lichtquellen bzw. Sensoren unabhängig voneinander sind.

7. Einrichtung nach einem der vorherigen Ansprüche, **dadurch gekennzeichnet, dass** die Steuerungseinheit (17) die Lichtquellen (12) so anzusteuern vermag, dass mehrere Leuchtzonen zur Beleuchtung mehrerer Objekte unabhängig voneinander bewirkt werden können.

8. Einrichtung nach einem der vorherigen Ansprüche, **dadurch gekennzeichnet, dass** die Steuerungseinheit (17) die Leuchtstärke der Lichtquellen (12), insbesondere Leuchtstoffröhren, über Vorschaltgeräte (13) beeinflusst.

9. Einrichtung nach einem der vorherigen Ansprüche, **dadurch gekennzeichnet, dass** die Lichtquellen stufenlos in ihrer Leuchtkraft regelbar sind.

10. Einrichtung nach einem der vorherigen Ansprüche, **dadurch gekennzeichnet, dass** die Sensoren (15) unsichtbar, insbesondere in Wänden, in Böden, hinter Blenden oder in der Beleuchtungseinrichtung, angeordnet sind.

11. Einrichtung nach einem der vorherigen Ansprüche, **dadurch gekennzeichnet, dass** als Sensoren Ultraschallsensoren, IR-Sensoren oder kapazitive Näherungsschalter vorgesehen sind.

12. Einrichtung nach einem der vorherigen Ansprüche, **dadurch gekennzeichnet, dass** über die Sensoren (15) und die Steuerungseinheit (17) die Intensität der Lichtquellen (12) beeinflussbar ist, wobei eine Ansteuerung einzelner oder mehrerer Lichtquellen (12) durch mehrere Sensoren (15) vorgesehen ist.

13. Einrichtung nach einem der vorherigen Ansprüche, **dadurch gekennzeichnet, dass** die Sensoren (15) als Sensorfeldzeile oder -matrix ausgebildet sind.

14. Einrichtung nach einem der vorherigen Ansprüche, **dadurch gekennzeichnet, dass** die Sensoren in dem Diffusor integriert sind.

15. Einrichtung nach einem der vorherigen Ansprüche, **dadurch gekennzeichnet, dass** die Sensoren unsichtbar auf der Innen- oder Außenseite des Diffusors befestigt sind, wobei vorzugsweise ein transparentes Sensormaterial, beispielsweise ITO (Indiumzinnoxid), eingesetzt wird.

16. Einrichtung nach einem der vorherigen Ansprüche, **dadurch gekennzeichnet, dass** die Sensoren (15) mit weiteren Steuerungselementen gekoppelt sind, die eine Beaufschlagung von einzelnen oder mehreren Lichtquellen (12) unabhängig von den ansprechenden Sensoren (15) vornehmen.

17. Einrichtung nach einem der vorherigen Ansprüche, **dadurch gekennzeichnet, dass** die Sensoren (15) aus kapazitiven Näherungsschaltern großer Reichweite bestehen.

18. Einrichtung nach einem der vorherigen Ansprüche, **dadurch gekennzeichnet, dass** die Sensoren (15) in einem Boden (7) vor einer Lichtwand integriert sind oder dass die Sensoren (15) an der Wand oder Decke hinter einer Folie verdeckt liegend angeordnet sind.

19. Einrichtung nach einem der vorherigen Ansprüche, **dadurch gekennzeichnet, dass** die Sensoren (15) gegenüber der elektromagnetischen Strahlung der Vorschaltgeräte (13) oder anderer Geräte durch eine Abschirmung geschützt sind, wobei das elektromagnetische Feld der Sensoren (15) die Folie ungehindert durchdringt und den Bereich unterhalb bzw. vor der Beleuchtungseinrichtung erfasst.

20. Einrichtung nach einem der vorherigen Ansprüche, **dadurch gekennzeichnet, dass** die Sensoren (15) mit elektromagnetisch empfindlichen Flächen, beispielsweise Foliengitter, Folienstreifen, maschendrahtähnlichen Gittern großer Maschenweite, oder einer bedampften Glasscheibe zwischen den Lichtquellen und dem Diffusor (6, 10) kombinierbar sind bzw. solche aufweisen.

## Claims

1. Illumination system, in particular as a wall or ceiling lamp, comprising a plurality of activatable light sources (1 2) disposed behind a common diffuser (6, 10)
**characterised in that**
the illumination system comprises sensors (15) for detecting a moving or stationary object (2), for example a human being,
the illumination system comprises a control unit (1 7) cooperating with the sensors (15) in such a way that the control unit (17) is capable of activating the light sources (1 2) such that a lighting zone is effected in which the object (2) and/or the area around the object are illuminated more strongly than the surroundings of the object, wherein
the control unit (17) is capable of activating the light sources (12) by continuous regulation of the luminosity of the light sources in such a way that the lighting zone is continuously made to follow the object.

2. System according to one of the preceding claims, **characterised in that** matted transparent surfaces, in particular glass or plastic panes or foils, such as translucent foils or lacquer foils, are used as a diffuser (6, 10).

3. System according to one of the preceding claims, **characterised in that** the matting of the diffuser and the distance of neighbouring lamps and their distance are dimensioned such that the individual lamps cannot be perceived by the observer and/or that a homogeneous illumination of the diffuser is achieved.

4. System according to one of the preceding claims, **characterised in that** the sensors (15) are disposed behind the diffuser (6, 10).

5. System according to one of the preceding claims, **characterised in that** the control unit (1 7) is capable of activating the light sources (1 2) in such a way that the lighting zone can be made to follow the object when it is moving.

6. System according to one of the preceding claims, **characterised in that** exactly one sensor is assigned to each light source, wherein the brightness of the light source can be controlled depending on the distance to the object, wherein in particular the individual light sources or sensors are independent from one another.

7. System according to one of the preceding claims, **characterised in that** the control unit (1 7) is capable of activating the light sources (12) in such a way that several lighting zones can be effected for illuminating several objects independently from one another.

8. System according to one of the preceding claims, **characterised in that** the control unit (1 7) influences the luminosity of the light sources (12), in particular fluorescent lamps, by means of ballast devices (13).

9. System according to one of the preceding claims, **characterised in that** the luminosity of the light sources can be continuously regulated.

10. System according to one of the preceding claims, **characterised in that** the sensors (15) are disposed invisibly, in particular in walls, in floors, behind covers or in the illumination system.

11. System according to one of the preceding claims, **characterised in that** ultrasonic sensors, IR sensors or capacitive proximity switches are provided as sensors.

12. System according to one of the preceding claims, **characterised in that** the intensity of the light sources (1 2) can be influenced through the sensors (15) and the control unit (1 7), with an activation of individual or several light sources (1 2) by several sensors (15) being provided.

13. System according to one of the preceding claims, **characterised in that** the sensors (15) are configured as a sensor-field line or matrix.

14. System according to one of the preceding claims, **characterised in that** the sensors are integrated into the diffuser.

15. System according to one of the preceding claims, **characterised in that** the sensors are invisibly attached on the inside or outside of the diffuser, with a transparent sensor material, for example ITO (indium-tin-oxide) being preferably used.

16. System according to one of the preceding claims, **characterised in that** the sensors (15) are coupled with additional controlling elements supplying individual or several light sources (1 2) independently from the driving sensors (15).

17. System according to one of the preceding claims, **characterised in that** the sensors (15) consist of long-range capacitive proximity sensors.

18. System according to one of the preceding claims, **characterised in that** the sensors (15) are disposed in a bottom (7) in front of a light wall, or that the sensors (1 5) are disposed on the wall or ceiling, located concealed behind a foil.

19. System according to one of the preceding claims, **characterised in that** the sensors (15) are protected against the electromagnetic radiation of the ballast devices (13) or other devices by a shield, wherein the electromagnetic field of the sensors (15) penetrates the foil unimpeded and captures the area below or in front of the illumination system.

20. System according to one of the preceding claims, **characterised in that** the sensors (15) can be combined with or comprise electromagnetically susceptible surfaces, such as foil grids, foil strips, mesh wire-like grids with a large mesh size or a vaporised glass plane between the light sources and the diffuser (6, 10).

## Revendications

1. Système d'éclairage, en particulier sous forme de lampe murale ou de plafonnier, avec plusieurs sources lumineuses (12) pouvant être commandées, disposées derrière un diffuseur commun (6, 10),
**caractérisé en ce que**
le système d'éclairage présente des détecteurs (15) servant à détecter un objet (2) en mouvement ou immobile, par exemple un être humain,
le système d'éclairage présente une unité de commande (17), qui coopère avec les détecteurs (15) de telle sorte que l'unité de commande (17) peut commander les sources lumineuses (12) pour produire une zone lumineuse, dans laquelle l'objet (2) et/ou l'étendue autour de l'objet est plus éclairé que l'environnement de l'objet,
l'unité de commande (17) pouvant commander les sources lumineuses (12) par régulation continue de l'intensité lumineuse des sources lumineuses de telle sorte que la zone lumineuse suit l'objet en continu.

2. Système selon l'une quelconque des revendications précédentes, **caractérisé en ce que** des surfaces transparentes dépolies, en particulier des plaques de verre ou de plastique ou des feuilles, telles des feuilles translucides ou des feuilles laquées, sont utilisées comme diffuseur (6, 10).

3. Système selon l'une quelconque des revendications précédentes, **caractérisé en ce que** le dépolissage du diffuseur et la distance entre des moyens lumineux voisins, ainsi que leur distance sont dimensionnés de telle sorte que, pour l'observateur, les différents moyens lumineux ne sont pas perceptibles et/ou un éclairage homogène du diffuseur est obtenu.

4. Système selon l'une quelconque des revendications précédentes, **caractérisé en ce que** les détecteurs (15) sont disposés derrière le diffuseur (6, 10).

5. Système selon l'une quelconque des revendications précédentes, **caractérisé en ce que** l'unité de commande (17) peut commander les sources lumineuses (12) de telle sorte que la zone lumineuse peut suivre l'objet, lorsque celui-ci se déplace.

6. Système selon l'une quelconque des revendications précédentes, **caractérisé en ce que** exactement un détecteur est affecté à chaque source lumineuse, la luminosité de la source lumineuse pouvant être commandée en fonction de l'éloignement de l'objet, les différentes sources lumineuses ou les différents détecteurs étant en particulier indépendants les uns des autres.

7. Système selon l'une quelconque des revendications précédentes, **caractérisé en ce que** l'unité de commande (17) peut commander les sources lumineuses (12) de sorte à pouvoir produire plusieurs zones lumineuses indépendamment les unes des autres pour l'éclairage de plusieurs objets.

8. Système selon l'une quelconque des revendications précédentes, **caractérisé en ce que** l'unité de commande (17) influence l'intensité lumineuse des sources lumineuses (12), en particulier des tubes fluorescents, par le biais de ballasts (13).

9. Système selon l'une quelconque des revendications précédentes, **caractérisé en ce que** l'intensité lumineuse des sources lumineuses est réglable en continu.

10. Système selon l'une quelconque des revendications précédentes, **caractérisé en ce que** les détecteurs (15) sont disposés de manière invisible, en particulier dans des murs, dans des sols, derrière des caches ou dans le système d'éclairage.

11. Système selon l'une quelconque des revendications précédentes, **caractérisé en ce que** des détecteurs à ultrasons, des détecteurs infrarouges ou des détecteurs de proximité capacitifs sont prévus comme détecteurs.

12. Système selon l'une quelconque des revendications précédentes, **caractérisé en ce que** l'intensité des sources lumineuses (12) peut être influencée par le biais des détecteurs (15) et de l'unité de commande (17), une commande d'une ou de plusieurs sources lumineuses (12) par plusieurs détecteurs (15) étant prévue.

13. Système selon l'une quelconque des revendications précédentes, **caractérisé en ce que** les détecteurs (15) sont réalisés sous forme de ligne ou de matrice de champ de détecteurs.

14. Système selon l'une quelconque des revendications précédentes, **caractérisé en ce que** les détecteurs sont intégrés dans le diffuseur.

15. Système selon l'une quelconque des revendications précédentes, **caractérisé en ce que** les détecteurs sont fixés de manière invisible du côté intérieur ou extérieur du diffuseur, un matériau de détecteur transparent, par exemple de l'ITO (oxyde d'étain et d'indium), étant utilisé de préférence.

16. Système selon l'une quelconque des revendications précédentes, **caractérisé en ce que** les détecteurs (15) sont couplés avec d'autres éléments de commande, qui procèdent à une alimentation d'une ou de plusieurs sources lumineuses (12) indépendamment des détecteurs (15) qui se déclenchent.

17. Système selon l'une quelconque des revendications précédentes, **caractérisé en ce que** les détecteurs (15) se composent de détecteurs de proximité capacitifs à grande portée.

18. Système selon l'une quelconque des revendications précédentes, **caractérisé en ce que** les détecteurs (15) sont intégrés dans un sol (7) devant un mur de lumière ou **en ce que** les détecteurs (15) sont disposés à plat, masqués derrière une feuille au niveau du mur ou du plafond.

19. Système selon l'une quelconque des revendications précédentes, **caractérisé en ce que** les détecteurs (15) sont protégés par un blindage par rapport au rayonnement électromagnétique des ballasts (13) ou d'autres appareils, le champ électromagnétique des détecteurs (15) traversant la feuille sans obstacles et détectant la zone sous ou devant le système d'éclairage.

20. Système selon l'une quelconque des revendications précédentes, **caractérisé en ce que** les détecteurs (15) peuvent être combinés avec des surfaces sensibles du point de vue électromagnétique, par exemple des grilles en feuille, des bandes de feuille, des grilles semblables à un grillage à grandes mailles ou une plaque de verre métallisée entre les sources lumineuses et le diffuseur (6, 10), ou bien présentent de telles surfaces.
